# EUROPEAN PATENT SPECIFICATION

(11) **EP 1 944 997 B1**
(45) Date of publication and mention of the grant of the patent: **07.07.2010**
(21) Application number: 08150136.3
(22) Date of filing: 10.01.2008
(51) Int. Cl.: H04W 4/22

(54) **Method and Apparatus for Connecting Emergency Call in Portable Terminal**
Verfahren und Vorrichtung zur Notrufverbindung in einem mobilen Endgerät
Procédé et appareil de connexion d'appel d'urgence dans un terminal portable

(30) Priority: 12.01.2007 KR 20070003792
(43) Date of publication of application: 16.07.2008
(73) Proprietor: Samsung Electronics Co., Ltd., Suwon-si, Gyeonggi-do (KR)
(72) Inventor: Choi, Jong-Mu, Gyeonggi-do (KR); Chae, Hee-Jung, Yeongtong-gu Suwon-si Gyeonggi-do (KR); Lee, Jung-Hun, Yeongtong-dong Yeongtong-gu Suwon-si Gyeonggi-do (KR); Kim, Mi-Soon, Gyeonggi-do (KR)
(74) Representative: Grünecker, Kinkeldey, Stockmair & Schwanhäusser Anwaltssozietät

(56) References cited:
- EP-A- 1 653 668
- EP-A- 1 662 822
- WO-A-2006/117759
- US-A1- 2006 030 290
- US-A1- 2006 251 066
- US-B1- 6 957 060

## Description

The present invention relates to a method and apparatus for connecting an emergency call in a portable terminal, and in particular, to a method and apparatus for connecting an emergency call in an unlicensed-band by using an IP-based Multimedia Subsystem (IMS) network in a state where a Subscriber Identification Module (SIM) card is not inserted in a dual mode portable terminal supporting a cellular network and an unlicensed-band network.

Today, mobile service providers are conducting extensive research and development in portable terminal emergency call techniques that enable emergency calls to be placed by a user in situations where the user encounters an emergency.

In this case, since portable terminals have been developed to support an access protocol that uses both a cellular band and an unlicensed wireless frequency band, a dual mode portable terminal can now perform a handover process between a cellular network and an unlicensed network in both voice and data sessions, and thus communication can be achieved when the portable terminal moves between the cellular network and the unlicensed frequency network. For example, a portable terminal supporting both a Global System for Mobile communication (GSM) network and a WiFi network, or a portable terminal supporting both a Universal Mobile Telecommunications System (UMTS) network and the WiFi network are currently being marketed.

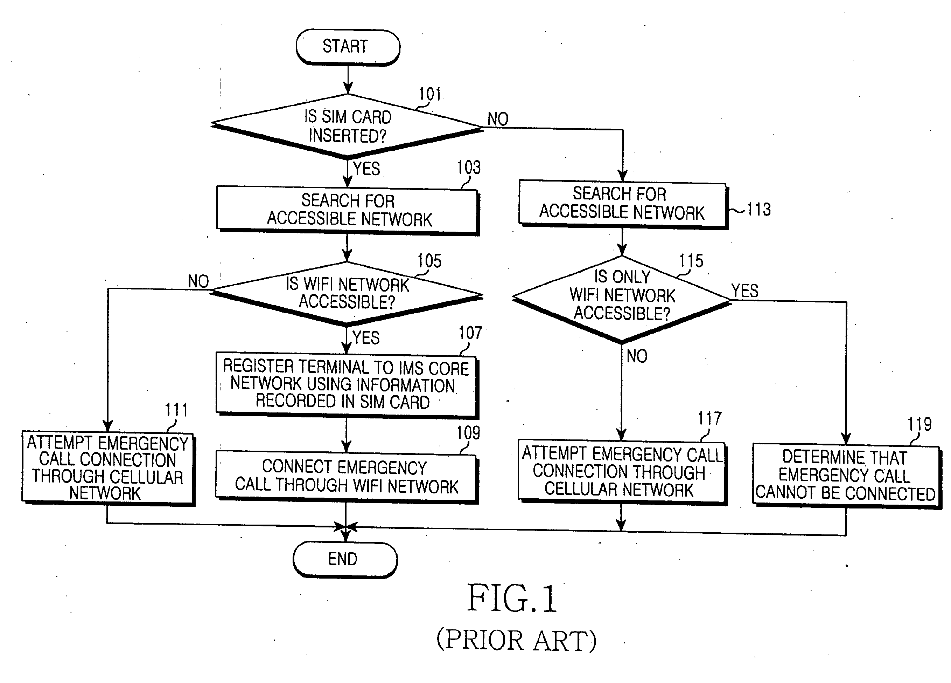

FIG. 1 is a flowchart illustrating a conventional process of connecting an emergency call in a portable terminal. The portable terminal supports an IP-based Multimedia Subsystem (IMS) Voice over Internet Protocol (VoIP) through a WiFi network, which is the aforementioned unlicensed-band network, and also supports the cellular voice communication.

In FIG. 1, in step 101, it is checked whether a Subscriber Identification Module (SIM) card is properly inserted into the dual mode portable terminal supporting both the cellular network and the WiFi network. Upon detecting the insertion of the SIM card, in step 103, a currently accessible network is searched. Thereafter, in step 105, the accessibility to the WiFi network is determined.

If the WiFi network is accessible, in step 107, an IMS core network registration process is performed using IMS related information recorded in the SIM card. In step 109, an emergency call is connected using an IMS VoIP through the WiFi network. The process is then ended.

However, if the WiFi network is not accessible, in step 111, connection to the cellular network is attempted using the cellular network, and the process is then ended.

In step 101, if the insertion of the SIM card is not detected, in step 113, a currently accessible network is searched. In step 115, it is determined whether the cellular network is not accessible and only the WiFi network is accessible.

If the cellular network is accessible, in step 117, the emergency call connection is attempted using the cellular network. If the only accessible network is the WiFi network, in step 119, it is determined that the emergency call cannot be connected. The process is then ended.

As described above, in order for a VoIP call to be connected through the unlicensed-band network, the portable terminal, which supports the cellular network and the WiFi network (i.e., the unlicensed-band network), is registered to the IMS core network by reading IMS related information from the SIM card.

Accordingly, a conventional portable terminal typically has a problem in that the emergency call cannot be connected when the SIM card is not inserted in the portable terminal and when the SIM card is set in a state where emergency calls are only accessible through the unlicensed-band network.

US 2006/251066 A1 discloses a portable terminal for use in a wireless local area network creating a temporary identifier to be used for an emergency call session based on the Medium Access Control (MAC) address of the access point that the terminal is connected to, the MAC address of the terminal of itself, the xDSL digital signal line identifier or the switch or router port number of the fixed line that the terminal is connect to either directly or via a wireless LAN access point.

US2006/030290 A1 is directed to identifying an emergency call in a wireless local area network by means of an indicator or an information element in the frame based signaling. The document further discloses continuing an emergency call that was initiated by a portable terminal operating on a cellular network in a wireless LAN network in case the emergency call was not completed on the cellular network.

EP-A-1 66 28 22 relates to saving time in the initialization of a mobile communication terminal by comparing IMSI information stored in the terminal and IMSI information stored in the SIM card. In the case where the information is consistent with each other, the terminal is initialized using information stored in the storage equipment of the terminal.

It is the object of the present invention to provide emergency call service to a portable terminal if no SIM card is inserted and unlicensed-band network is available.

This object is solved by the subject matter disclosed by the independent claims.

Preferred embodiments are defined by the dependent claims.

The present invention has been designed to substantially solve at least the above problems and/or disadvantages and to provide at least the advantages below.

The above object and other aspects, features and advantages of the present invention will become more apparent from the following detailed description when taken in conjunction with the accompanying drawings in which:
FIG. 1 is a flowchart illustrating a conventional process of connecting an emergency call in a portable terminal;
FIG. 2 is a block diagram of a portable terminal according to the present invention; and
FIG. 3 is a flowchart illustrating a process of connecting an emergency call in a portable terminal according to the present invention.

A preferred embodiment of the present invention will be described herein below with reference to the accompanying drawings. In the following description, well-known functions or constructions are not described in detail since they would obscure the invention in unnecessary detail.

A method and apparatus for connecting an emergency call using information recorded in a Subscriber Identification Module (SIM) card will is described below wherein the information is also pre-stored in a memory of a dual mode portable terminal supporting a cellular network (e.g., GSM or UMTS) and an unlicensed-band network. Furthermore, the SIM card is an IMS Subscriber Identification Module (ISIM) card that has the information required in an IMS network registration process. The unlicensed-band network uses an unlicensed Industrial, Science, and Medical (ISM) wireless frequency band. Examples of the unlicensed-band include WiFi (IEEE 802.11, HyperLan), Bluetooth, 802.15.4, and Ultra Wide Band (UWB). The present invention applies to all unlicensed-band networks, and the WiFi network is described hereinafter for example. In addition, the following descriptions are explained under the assumption that the dual mode portable terminal can access to the cellular network and/or the unlicensed-band network.

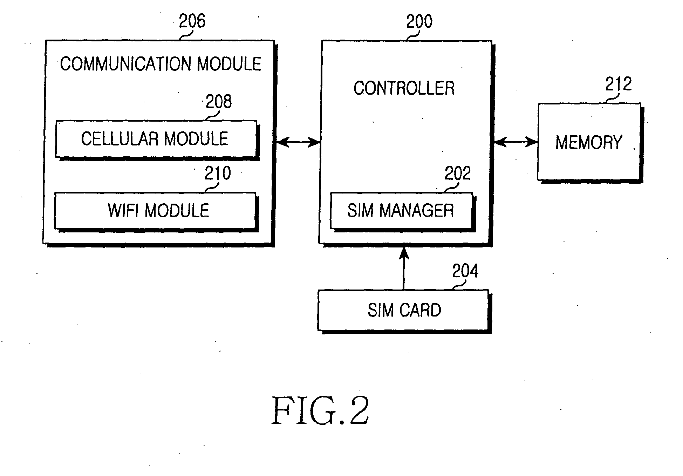

FIG. 2 is a block diagram of a portable terminal according to the present invention. In FIG. 2, the portable terminal includes a controller 200, a SIM card 204, a communication module 206, and a memory 212. The controller 200 includes a SIM manager 202. The communication module 206 includes a cellular module 208 and a WiFi module 210.

The controller 200 provides the overall control to the portable terminal. For example, the controller 200 controls voice calls and data communications. In particular, the controller 200 includes the SIM manager 202 and thus, when an emergency call connection event occurs in a state where the WiFi network is accessible, an emergency call connection function is processed and controlled using IMS registration information recorded in the SIM card 204 or IMS registration information pre-stored in the memory 212 according to the insertion state of the SIM card 204.

The SIM manager 202 checks the insertion state of the SIM card 204. Upon detecting the insertion of the SIM card 204, the SIM manager 202 reads the IMS registration information recorded in the SIM card 204, and outputs the read information to the communication module 206. When a signal, which indicates that the IMS core network registration process has been successfully made, is input from the communication module 206, the SIM manager 202 outputs the IMS registration information to the memory 212. In a case where the SIM card 204 is not inserted in the portable terminal, the SIM manager 202 reads the IMS registration information pre-stored in the memory 212, and delivers the read information to the communication module 206. The IMS registration information may include security information, Proxy-Call Session Control Function (P-CSCF) information, public Uniform Resource Identifier (URI) information, and private URI information.

The communication module 206 includes the cellular module 208 and the WiFi module 210 and, thus, processes signals transmitted/received through the cellular network and the WiFi network. Further, the communication module 206 searches for a network to which the portable terminal can be currently accessed, and delivers information on the found network to the controller 200. Under the control of the controller 200, the communication module 206 performs a function for connecting an emergency call by using the cellular network and the WiFi network. In particular, the communication module 206 registers the portable terminal to the IMS core network by using the IMS registration information input from the controller 200, and thus performs a function for connecting the emergency call using a Voice over Internet Protocol (VoIP) call through the WiFi network.

The memory 212 stores a variety of programs for general operations of the portable terminal, micro code, and data that can be updated. In particular, according to the present invention, the memory 212 receives the IMS registration information from the controller 200 and then stores the information.

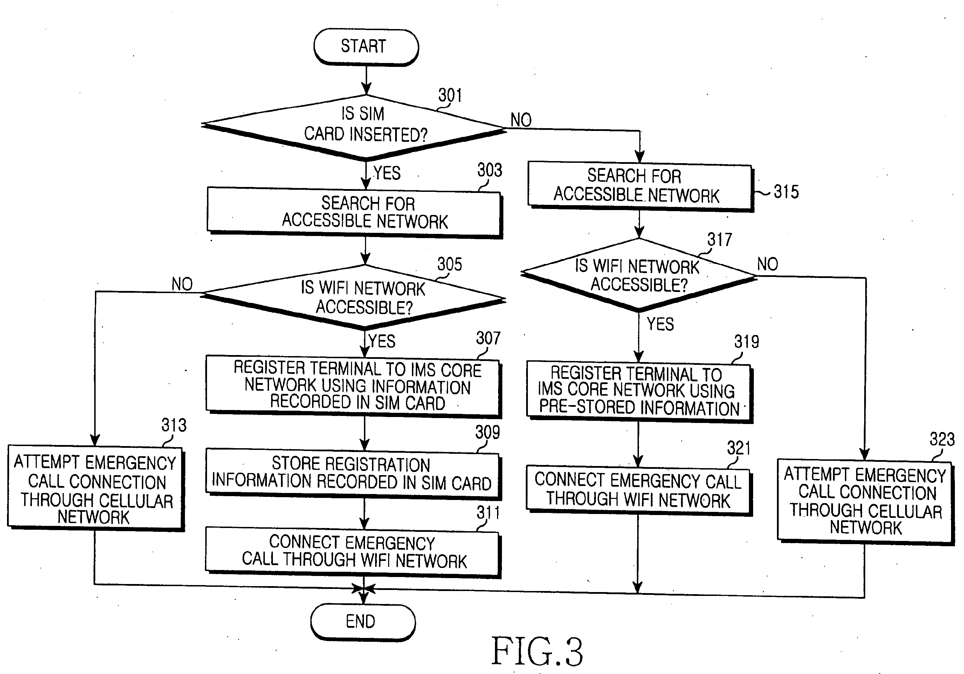

FIG. 3 is a flowchart illustrating a process of connecting an emergency call in a portable terminal according to the present invention.

In FIG. 3, in step 301, insertion of a SIM card in the portable terminal is checked. Upon detection of the insertion of the SIM card, in step 303, a currently accessible network is searched in a state where at least one network is accessible. In step 305, a determination is made as to whether the WiFi network is accessible. In this case, by determining the accessibility of only the WiFi network, in a state where the cellular network and the WiFi network are both accessible, the portable terminal attempts an emergency call connection through the WiFi network first before attempting an emergency call connection through the cellular network.

If the WiFi network is accessible, in step 307, the portable terminal is registered to an IMS core network by using IMS related information (e.g., security information, P-CSCF information, and public and private URIs information) recorded in the SIM card. In step 309, the IMS related information is stored in the memory 212 of FIG. 2. In step 311, the emergency call is connected using a VoIP call through the WiFi network. Then, the process is ended.

If the WiFi network is not accessible, that is, only the cellular network is accessible, in step 313, an emergency call connection is attempted using the cellular network, and, thereafter, the process ends.

If the SIM card is not inserted, in step 315, a currently accessible network is searched for in a state where at least one network is accessible. Then, in step 317, it is determined whether the WiFi network is accessible.

If the WiFi network is not accessible, in step 319, the portable terminal is registered to the IMS core network by using the IMS related information recorded in the memory 212 of FIG. 2. In step 321, an emergency call is then connected using the VoIP call through the WiFi network, and the process then ends.

Otherwise, that is, when only the cellular network is accessible, in step 323, the emergency call connection is attempted using the cellular network, and the process then ends.

According to the present invention, IMS registration information recorded in a SIM card is pre-stored in a memory of a dual mode portable terminal supporting a cellular network and an unlicensed-band network. Thus, a user can place an emergency call even if the SIM card is not inserted in the portable terminal in a state where only the unlicensed-band network is accessible.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the invention has been shown and described with reference to certain preferred embodiments thereof, it will be understood by those skilled in the art that various changes in form and details may be made therein without departing from the scope of the invention as defined by the appended claims. Therefore, the scope of the invention is defined not by the detailed description of the invention but by the appended claims.

## Claims

1. A method of connecting an emergency call in a portable terminal supporting a cellular network and an unlicensed-band network, the method comprising the steps of:
if an emergency call connection event occurs, searching for an accessible network and checking (301) an insertion state of a SIM card (204);
if the unlicensed-band network is accessible and the SIM card is not inserted, performing (319) an IP-based Multimedia Subsystem, IMS, registration process by using IMS related information pre-stored in a memory (212), said pre-stored IMS related information including at least one item selected from a group consisting of security information, Proxy-Call Session Control Function, P-CSCF, information, and public and private Uniform Resource Identifiers, URIs, information recorded in the SIM card and having been stored in the memory (212) during an IMS registration process (307) when a SIM card was inserted and an unlicensed band network was available; and
connecting (321) the emergency call through the unlicensed-band network.

2. The method of claim 1, further comprising:
if the unlicensed-band network is accessible and the SIM card (204) is inserted, performing the IMS registration process (307) by using information recorded in the SIM card;
storing (309), in the memory (212), the information recorded in the SIM card, and updating the information; and
connecting (311) the emergency call through the unlicensed-band network.

3. The method of claim 1 or 2, wherein the information pre-stored in the memory (212) is the same as the information which is recorded in the SIM card (204) and is used when the IMS registration process is last performed.

4. An apparatus of connecting an emergency call in a portable terminal supporting a cellular network and an unlicensed-band network, the apparatus comprising:
means for, if an emergency call connection event occurs, searching for an accessible network and checking (301) an insertion state of a SIM card (204);
means for, if the unlicensed-band network is accessible and the SIM card is not inserted, performing (319) an IP-based Multimedia Subsystem, IMS, registration process by using IMS related information pre-stored in a memory (212), said pre-stored IMS related information including at least one item selected from a group consisting of security information, Proxy-Call Session Control Function, P-CSCF, information, and public and private Uniform Resource Identifiers, URIs, information recorded in the SIM card and having been stored in the memory (212) during an IMS registration process (307) when a SIM card was inserted and an unlicensed band network was available; and
means for connecting (321) the emergency call through the unlicensed-band network.

## Patentansprüche

1. Verfahren zum Vermitteln eines Notrufes in einem tragbaren Endgerät, welches ein zellulares Netzwerk und ein Netzwerk im unlizensierten Frequenzband unterstützt, wobei das Verfahren die Schritte umfasst:
Wenn ein Ereignis zum Vermitteln eines Notrufes auftritt, Suchen nach einem verfügbaren Netzwerk und Überprüfen (301) des Einlege-Zustandes einer SIM Karte (204);
Wenn ein Netzwerk im unlizensierten Frequenzband verfügbar ist und die SIM Karte nicht eingelegt ist, Durchführen (319) eines IP-basierten Multimediateilsystem, IMS, Vorgangs zur Registration unter Verwendung von IMS bezogener Information, die in einem Speicher (212) vorgespeichert wurde, wobei besagte vorgespeicherte IMS bezogene Information mindestens einen aus einer Gruppe ausgewählten Eintrag beinhaltet, wobei die Gruppe aus Sicherheitsinformation, Information zur Steuerung von Sitzungen eines Stellvertreteranrufs (Proxy-Call), P-CSCF und öffentlichen und privaten einheitlichen Bezeichnern für Ressourcen, URIs, besteht, der auf der SIM Karte aufgezeichnet wurde und der im Speicher (212) während eines IMS Vorgangs zur Registrierung (307) als eine SIM Karte eingelegt war und ein Netzwerk im unlizensierten Frequenzband verfügbar war, gespeichert wurde; und
Vermitteln (321) des Notrufes durch das Netzwerk im unlizensierten Frequenzband.

2. Verfahren nach Anspruch 1, des weiteren umfassend
Durchführen des IMS Vorgangs zur Registrierung (307) unter Verwendung der auf der SIM Karte gespeicherten Information, falls das Netzwerk im unlizensierten Frequenzband zugänglich ist;
Speichern (309) im Speicher (212) die Information, die auf der SIM Karte speichert wurde und Aktualisieren der Information; und
Vermitteln (311) des Notrufes durch das Netzwerk im unlizensierten Frequenzband.

3. Verfahren nach Anspruch 1 oder 2, wobei die im Speicher (212) vorgespeicherte Information gleich der auf der SIM Karte (204) gespeicherten Information ist und verwendet wurde als der Vorgang zur Registrierung zuletzt durchgeführt wurde.

4. Vorrichtung zum Vermitteln eines Notrufes in einem tragbaren Endgerät, welches ein zellulares Netzwerk und ein Netzwerk im unlizensierten Frequenzband unterstützt, wobei die Vorrichtung umfasst:
Wenn ein Ereignis zum Vermitteln eines Notrufes auftritt, Mittel zum Suchen nach einem verfügbaren Netzwerk und Überprüfen (301) des Einlege-Zustandes einer SIM Karte (204);
Wenn ein Netzwerk im unlizensierten Frequenzband verfügbar ist und die SIM Karte nicht eingelegt ist, Mittel zum Durchführen (319) eines IP-basierten Multimediateilsystem, IMS, Vorgangs zur Registration unter Verwendung von IMS bezogener Information, die in einem Speicher (212) vorgespeichert wurde, wobei besagte vorgespeicherte IMS bezogene Information mindestens einen aus einer Gruppe ausgewählten Eintrag beinhaltet, wobei die Gruppe aus Sicherheitsinformation, Information zur Steuerung von Sitzungen es eines Stellvertreteranrufs (Proxy-Call), P-CSCF und öffentlichen und privaten einheitlichen Bezeichnern für Ressourcen, URIs, besteht, der auf der SIM Karte aufgezeichnet wurde und der im Speicher (212) während eines IMS Vorgangs zur Registrierung (307) als eine SIM Karte eingelegt war und ein Netzwerk im unlizensierten Frequenzband verfügbar war, gespeichert wurde; und
Mittel zum Vermitteln (321) des Notrufes durch das Netzwerk im unlizensierten Frequenzband.

## Revendications

1. Procédé de connexion d'un appel d'urgence dans un terminal portable prenant en charge un réseau cellulaire et un réseau à bande non réglementée, le procédé comprenant les étapes consistant à :
si un évènement de connexion pour appel d'urgence se produit, rechercher un réseau accessible et vérifier (301) un état d'insertion d'une carte SIM (204) ;
si le réseau à bande non réglementée est accessible et que la carte SIM n'est pas insérée, mettre en oeuvre (319) un processus d'enregistrement de sous-système multimédia sur base IP, soit IP-based Multimedia Subsystem ou IMS, en utilisant des informations relatives à l'IMS préenregistrées dans une mémoire (212), lesdites informations relatives à l'IMS préenregistrées comprenant au moins un élément sélectionné parmi le groupe consistant en des informations de sécurité, des informations de fonction de contrôle de session d'appel par mandataire, soit Proxy-Call Session Control Function ou P-CSCF, et des informations publiques et privées d'identifiants uniformes de ressource, soit Uniform Resource Identifier ou URI, enregistrées dans la carte SIM et ayant été stockées dans la mémoire (212) durant un processus d'enregistrement IMS (307) lorsqu'une carte SIM était insérée et qu'un réseau à bande non réglementée était disponible ; et
la connexion (321) de l'appel d'urgence via le réseau à bande non réglementée.

2. Procédé selon la revendication 1, comprenant en outre :
si le réseau à bande non réglementée est accessible et que la carte SIM (204) est insérée, la mise en oeuvre du processus d'enregistrement IMS (307) en utilisant des informations enregistrées dans la carte SIM ;
le stockage (309), dans la mémoire (212), des informations enregistrées dans la carte SIM et la mise à jour des informations ; et
la connexion (311) de l'appel d'urgence via le réseau à bande non réglementée.

3. Procédé selon la revendication 1 ou 2, dans lequel les informations préenregistrées dans la mémoire (212) sont les mêmes que les informations qui sont enregistrées dans la carte SIM (204) et utilisées lorsque le processus d'enregistrement IMS est effectué pour la dernière fois.

4. Appareil de connexion pour appel d'urgence dans un terminal portable prenant en charge un réseau cellulaire et un réseau à bande non réglementée, l'appareil comprenant :
un moyen pour rechercher un réseau accessible et vérifier (301) un état d'insertion d'une carte SIM (204) si un évènement de connexion pour appel d'urgence se produit ;
un moyen pour mettre en oeuvre (319) un processus d'enregistrement d'un sous-système multimédia à base IP, IMS, si le réseau à bande non réglementée est accessible et que la carte SIM n'est pas insérée, en utilisant des informations relatives à l'IMS préenregistrées dans une mémoire (212), lesdites informations relatives à l'IMS préenregistrées comprenant au moins un élément sélectionné parmi le groupe consistant en des informations de sécurité, des informations de fonction de contrôle de session d'appel par mandataire, soit Proxy-Call Session Control Function ou P-CSCF, et des informations publiques et privées d'identifiants uniformes de ressource, soit Uniform Resource Identifier ou URI, enregistrées dans la carte SIM et ayant été stockées dans la mémoire (212) durant un processus d'enregistrement IMS (307) lorsqu'une carte SIM était insérée et qu'un réseau à bande non réglementée était disponible ; et
un moyen pour connecter (321) l'appel d'urgence via le réseau à bande non réglementée.
